# EUROPÄISCHE PATENTSCHRIFT

(11) **EP 2 029 387 B1**
(45) Veröffentlichungstag und Bekanntmachung des Hinweises auf die Patenterteilung: **12.10.2011**
(21) Anmeldenummer: 07729469.2
(22) Anmeldetag: 24.05.2007
(51) Int. Cl.: B60N 2/02

(54) **SCHRITTSCHALTWERK, INSBESONDERE FÜR EINE SITZVERSTELLUNG**
STEP-BY-STEP MECHANISM, IN PARTICULAR FOR A SEAT ADJUSTMENT
DISPOSITIF D'ENCLIQUETAGE A CRAN, NOTAMMENT POUR LE POSITIONNEMENT D'UN SIEGE

(30) Priorität: 07.06.2006 DE 102006026392
(43) Veröffentlichungstag der Anmeldung: 04.03.2009
(73) Patentinhaber: Schaeffler Technologies GmbH & Co. KG, 91074 Herzogenaurach (DE)
(72) Erfinder: HOCHMUTH, Harald, 91469 Hagenbüchach (DE)
(86) Internationale Anmeldenummer: PCT/EP2007/055038
(87) Internationale Veröffentlichungsnummer: WO 2007/141143

(56) Entgegenhaltungen:
- DE-A1- 10 104 591
- DE-A1- 19 854 931
- DE-A1-102005 018 148
- FR-A- 2 809 355

## Beschreibung

### Gebiet der Erfindung

Die Erfindung betrifft ein insbesondere für eine Sitzverstellung in einem Kraftfahrzeug geeignetes Schrittschaltwerk.

### Hintergrund der Erfindung

Ein als Klemmrollenschaltwerk ausgebildetes Schrittschaltwerk ist beispielsweise aus der DE 198 54 931 A1 bekannt. Das Klemmrollenschaltwerk bildet in Zusammenwirkung mit einem Klemmrollengesperre eine Stelleinrichtung zur Verstellung eines Kraftfahrzeugsitzes. Die Abtriebswelle des Klemmrollengesperres ist mit dem Abtriebselement des Klemmrollenschaltwerks kuppelbar, wobei die Abtriebswelle und das Abtriebselement in oder an einem gemeinsamen Gehäuse gelagert sind. Insgesamt handelt es sich bei der Stelleinrichtung nach der DE 198 54 931 A1 um eine bewährte Konstruktion.

### Aufgabe der Erfindung

Der Erfindung liegt die Aufgabe zugrunde, eine Stelleinrichtung zur Verstellung eines Kraftfahrzeugsitzes gegenüber dem Stand der Technik hinsichtlich Bauraumbedarf und Fertigungsmöglichkeiten weiter zu verbessern.

### Zusammenfassung der Erfindung

Diese Aufgabe wird erfindungsgemäß gelöst durch ein Schrittschaltwerk mit den Merkmalen des Anspruchs 1. Dieses insbesondere für eine Sitzverstellung, beispielsweise eine Sitzhöhenverstellung, eine Sitzneigungsverstellung oder eine Lehnenverstellung geeignetes Schrittschaltwerk weist ein vorzugsweise als spanlos umgeformtes Blechteil gefertigtes Gehäusebauteil auf, in oder an dem ein mit einem Antriebselement, insbesondere einem manuell betätigbaren Schwenkhebel, verbundener Außenring sowie ein als Abtriebselement fungierender Innenring konzentrisch angeordnet sind. Das Antriebselement kann auch einstückig, insbesondere als Sinterteil, mit dem Außenring hergestellt sein. Zur Drehmomentübertragung zwischen dem Außenring und dem Innenring sind Klemmkörper, insbesondere Klemmrollen, vorgesehen, die mit bevorzugt im Außenring ausgebildeten Doppelklemmrampen zusammenwirken. Alternativ ist auch die Ausbildung von Doppelklemmrampen im Innenring oder die Ausbildung von Klemmkonturen sowohl im Innen- als auch im Außenring, welche zusammen als Doppelklemmrampen fungieren, möglich.

Zur Herstellung einer schaltbaren Freilauffunktion in beiden Drehrichtungen sind konzentrisch zum Innen- und Außenring zwei gegeneinander verschwenkbare Federträger angeordnet. Die Schwenkbewegung eines jeden vorzugsweise die Grundform eines dreiarmigen Sterns aufweisenden Federträgers ist durch einen Anschlag am Gehäusebauteil begrenzt. Jeder der vorzugsweise aus Kunststoff gefertigten Federträger greift sowohl in den zwischen dem Außenring und dem Innenring gebildeten Ringraum als auch in einen Innenraum radial innerhalb des Innenrings ein. Die Federträger, welche im Wesentlichen in einer gemeinsamen, normal zur Achse des Schrittschaltwerks angeordneten Ebene liegen, sind durch mindestens eine im Innenraum angeordnete Feder gegeneinander verspannt. Jeder Federträger weist innerhalb des Ringraums angeordnete Anschlagflächen auf, die zur Kontaktierung der Klemmkörper vorgesehen sind. Sind die Klemmkörper in der Mitte der jeweiligen Doppelklemmrampen angeordnet, so sind die Anschlagflächen der beiden Federträger mit minimalem Abstand zueinander positioniert. Durch die Verspannung zwischen den Federträgern wirkt zwischen diesen ein Drehmoment, welches permanent den minimalen Abstand zwischen den Anschlagsflächen herzustellen versucht. Die Anschlagflächen sind derart gestaltbar, dass die Klemmkörper, wenn sie sich in der Mitte der Doppelklemmrampen, d.h. in Neutralposition, befinden, vom Innenring abgehoben sind.

Bei einer Verschwenkung des Außenrings, welche eine kraftschlüssige Verbindung vom Außenring über die Klemmkörper zum Innenring herstellt, wird einer der Federträger durch die Klemmkörper mitgenommen, während der andere Federträger durch den Anschlag am Gehäusebauteil blockiert bleibt. Gesonderte Freilauffedern im Ringraum sind nicht erforderlich. Vielmehr fungiert die mindestens eine im Innenraum angeordnete, die Federträger gegeneinander verspannende Feder sowohl als Rückstellfeder des Antriebselementes als auch als indirekt mit den Klemmkörpern zusammenwirkende Freilauffeder. Vorzugsweise sind mehrere als Schraubenfeder ausgebildete Federn zwischen die Federträger gespannt, wobei die Anzahl der Federn der Anzahl der Klemmkörper entspricht. Bei der Übertragung eines Drehmoments zwischen dem Außenring und dem Innenring haben die Federträger keine kraftübertragende Funktion. Wird dagegen das Antriebselement mittels der Federn selbsttätig in die Neutralposition zurückgestellt, so entsteht ein Kraftfluss von einem Federträger über die Klemmkörper zum Außenring. Die hierbei auftretenden Kräfte sind jedoch wesentlich geringer als die bei der Betätigung des Schrittschaltwerkes mittels manueller Verstellung des Antriebselementes auftretenden Kräfte.

Nachfolgend wird ein Ausführungsbeispiel der Erfindung anhand einer Zeichnung näher erläutert. Hierin zeigen:

### Kurze Beschreibung der Zeichnung

- Figur 1: ein Schrittschaltwerk in Explosionsdarstellung,
- Figur 2 und 3: das Schrittschaltwerk nach Figur 1 in verschiedenen perspektivischen Darstellungen,
- Figur 4: Federträger des Schrittschaltwerks nach Figur 1, und
- Figur 5 und 6: das Schrittschaltwerk nach Figur 1 in Antriebsstellung.

### Ausführliche Beschreibung der Zeichnung

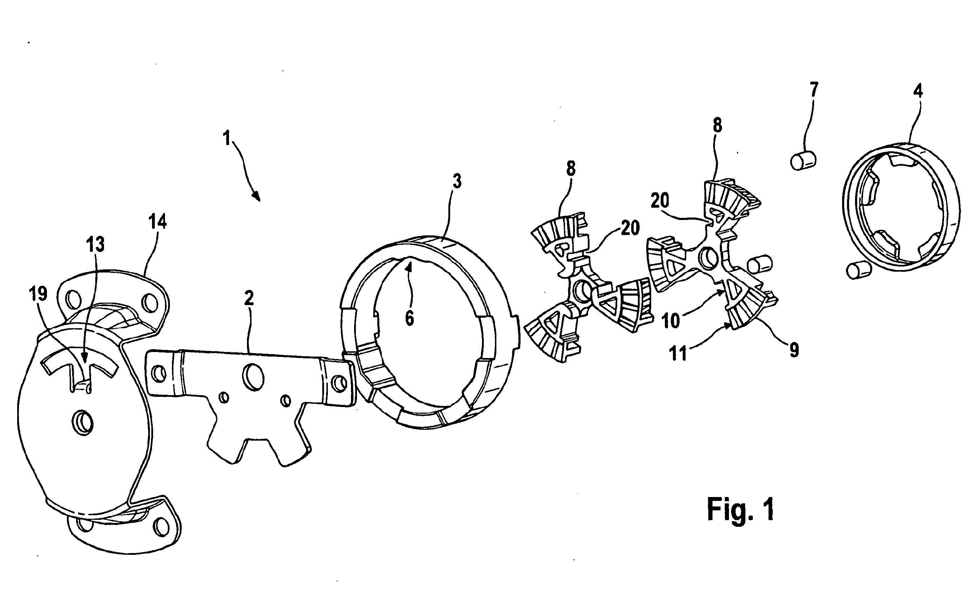

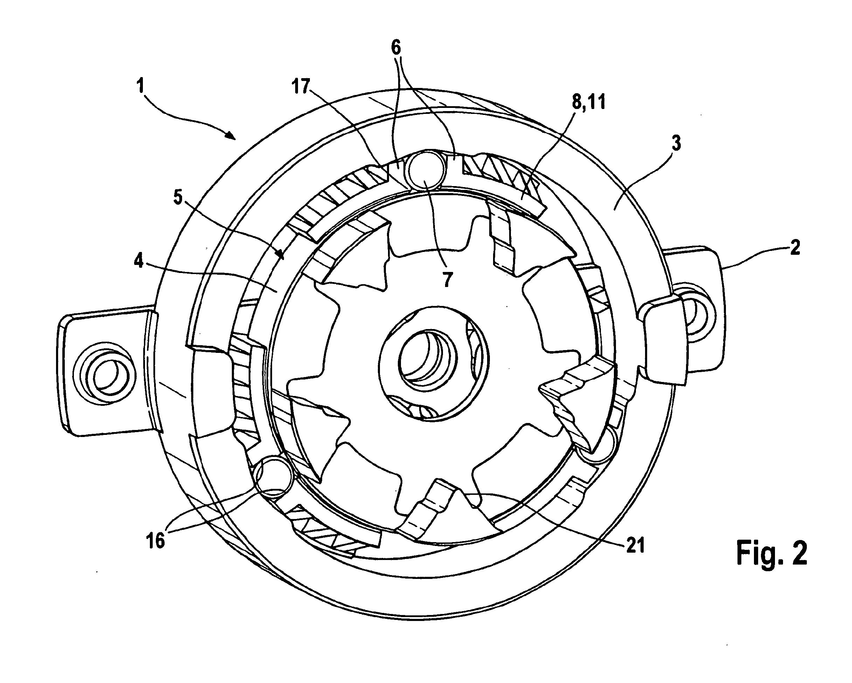

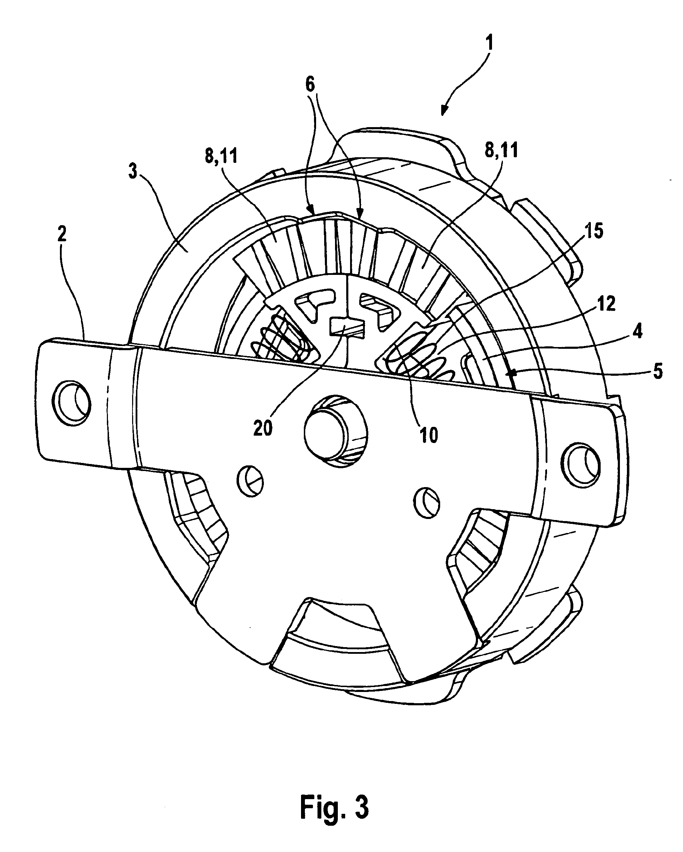

Die Figuren 1 bis 6 zeigen wesentliche Komponenten eines Schrittschaltwerks 1 einer nicht weiter dargestellten Sitzverstellung in einem Kraftfahrzeug. An einem Antriebselement 2, auch als Mitnehmer bezeichnet, ist ein manuell betätigbarer, nicht dargestellter Schwenkhebel befestigt. Das Antriebselement 2 ist drehfest verbunden mit einem Außenring 3, welcher einen als Abtriebselement fungierenden Innenring 4 unter Bildung eines Ringraums 5 umgreift. Abweichend von der Darstellung nach Fig. 1 ist es auch möglich, ein einziges Teil, insbesondere ein Sinterteil, vorzusehen, welches die Funktionen des Außenrings 3 sowie des Antriebselementes 2 vereint. Die innere Oberfläche des Außenrings 3 weist Doppelklemmrampen 6 auf, während die äußere Oberfläche des Innenrings 4 vollständig zylindrisch ausgebildet ist. In Neutralstellung des Schrittschaltwerks 1 (Figuren 2 und 3) befinden sich einzelne Klemmkörper 7, nämlich drei Klemmrollen, in der Mitte jeweils einer Doppelklemmrampe 6. Die Klemmkörper 7 sind zur Zusammenwirkung mit den Ringen 3, 4 sowie mit zwei Federträgern 8 vorgesehen. Jeder Federträger 8 hat die Grundform eines dreiarmigen Sterns, wobei jeder Arm 9 einen inneren Abschnitt 10 und einen äußeren Abschnitt 11 aufweist. Während der letztgenannte Abschnitt 11 in den Ringraum 5 eingreift, greift der innere Abschnitt 10 in einen radial innerhalb des Innenrings 4 angeordneten Innenraum 12 ein. Die Federträger 8 sind auf einen nicht dargestellten Bolzen aufgesteckt, welcher auch eine Öffnung 13 eines Gehäusebauteils 14, das als spanlos umgeformtes Blechteil gefertigt ist und den Außenring 3 teilweise umgreift, durchdringt. Die Lage dieses Bolzens, welcher mit einem nicht dargestellten Abtriebselement eines mit dem Schrittschaltwerk 1 zusammenwirkenden Klemmrollengesperres drehfest verbunden ist, gibt die Axialrichtung des Schrittschaltwerks 1 an.

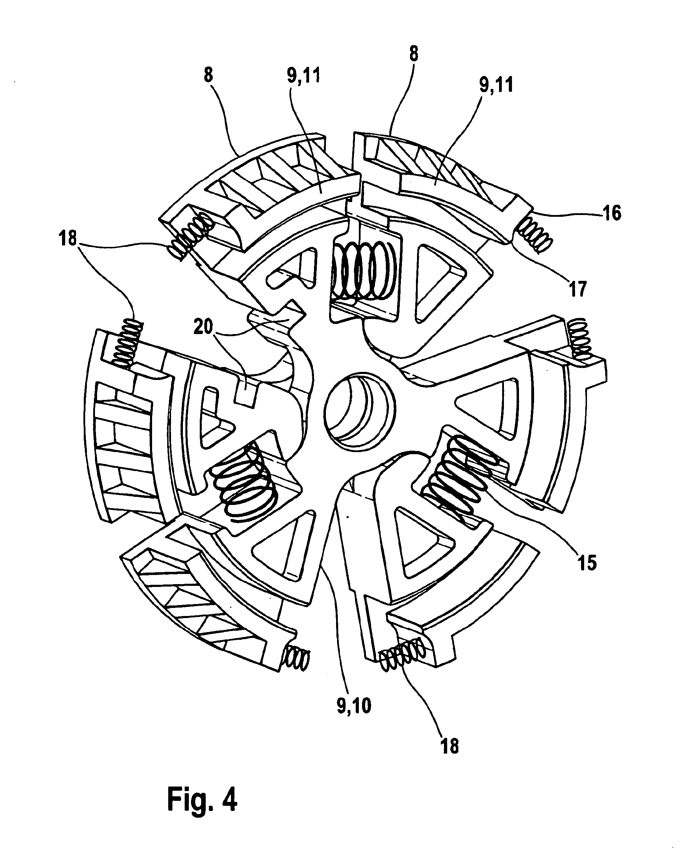

Die relativ zueinander schwenkbar gelagerten Federträger 8 sind durch drei im Innenraum 12 angeordnete Federn 15, wobei es sich um als Druckfedern ausgebildete Schraubenfedern handelt, gegeneinander verspannt. In der Anordnung nach Figur 4 sind die Federträger 8 derart relativ zueinander positioniert, dass im Ringraum 5 angeordnete Anschlagflächen 16 maximal voneinander beabstandet sind. Die in Figur 4 nicht dargestellten Klemmkörper 7 befinden sich zwischen Anschlagflächen 16 verschiedener Federträger 8. An den Anschlagflächen 16 ist jeweils ein Fuß 17 ausgebildet, welcher dafür sorgt, dass die Klemmkörper 7 bei in Neutralstellung befindlichem Schrittschaltwerk 1 vom Innenring 4 abgehoben sind. Optional sind zwischen die Klemmkörper 7 und die Anschlagflächen 16 Freilauffedern 18 eingespannt, welche jedoch keine Voraussetzung für die Funktion des Schrittschaltwerks 1 sind.

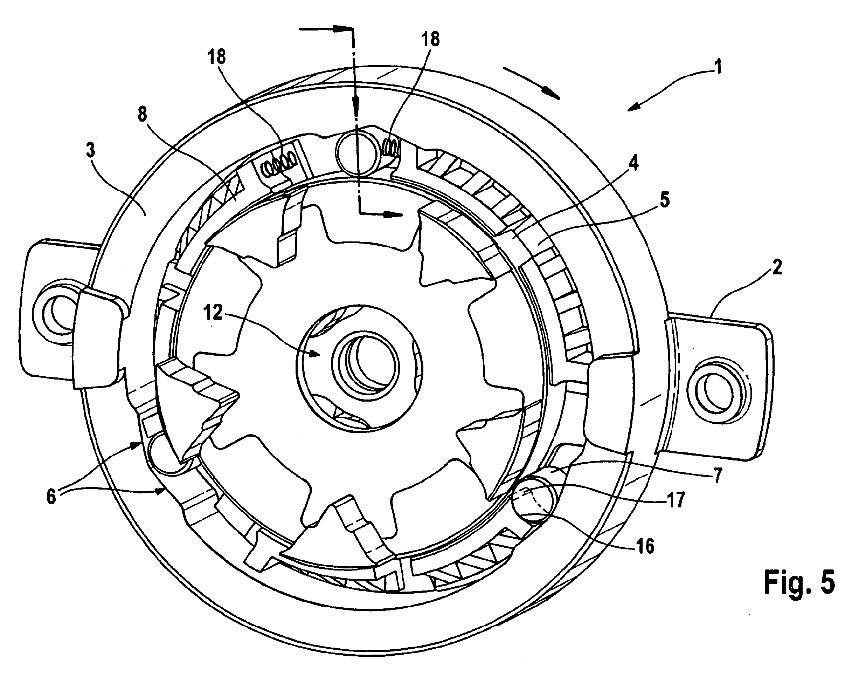

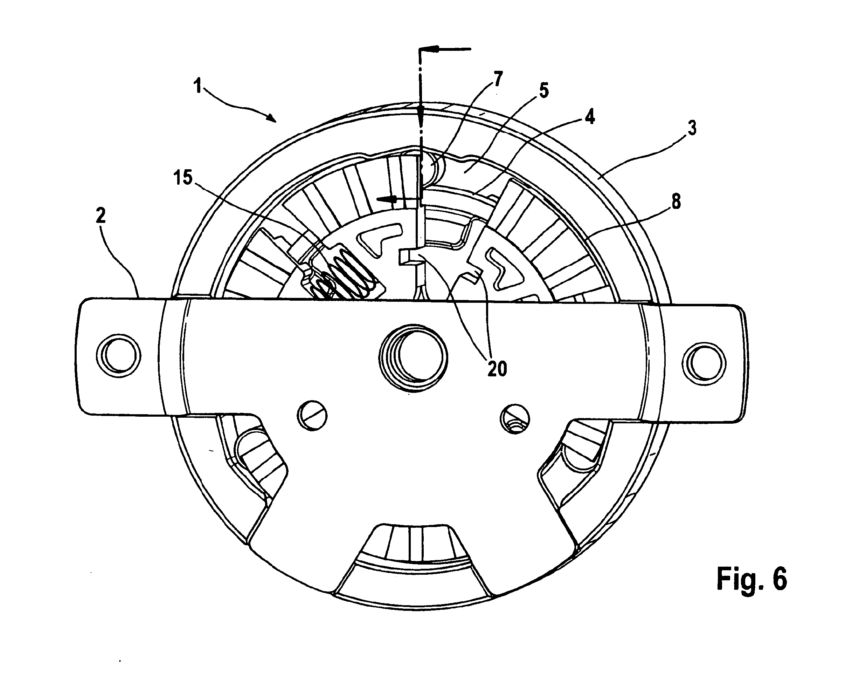

Wird der Außenring 3 mittels des Antriebselementes 2 relativ zum Gehäusebauteil 14 verschwenkt, so bleiben beide Federträger 8 solange mit minimalem Abstand zwischen den Anschlagflächen 16 in unveränderter Winkelposition, bis ein Kraftschluss vom Außenring 3 über die Klemmkörper 7 zum Innenring 4 hergestellt ist. Im weiteren Verlauf der Schwenkbewegung werden die Arme 9 eines Federträgers 8 durch die Klemmkörper 7 mitgenommen, während der andere Federträger 8 mittels eines Anschlags 19, der in eine Aussparung 20 zwischen den Federträgern 8 eingreift, festgehalten wird. Hierbei werden die zwischen die Arme 9 der beiden Federträger 8 gespannten Federn 15 weiter komprimiert. Die Rückstellung des Schrittschaltwerks 1 von der in den Figuren 5 und 6 dargestellten Antriebsposition in die Neutralposition erfolgt, indem die Federn 15 expandieren, wobei die Anschlagflächen 16 gegen die Klemmkörper 7 drücken, welche ihrerseits den Außenring 3 mitnehmen. Der Innenring 4, welcher drehfest mit Klauen 21 eines nicht weiter dargestellten Klemmrollengesperres verbunden ist, bleibt hierbei in unveränderter Winkelposition.

### Bezugszeichenliste

- 1: Schrittschaltwerk
- 2: Antriebselement
- 3: Außenring
- 4: Innenring
- 5: Ringraum
- 6: Doppelklemmrampe
- 7: Klemmkörper
- 8: Federträger
- 9: Arm
- 10: innerer Abschnitt
- 11: äußerer Abschnitt
- 12: Innenraum
- 13: Öffnung
- 14: Gehäuse
- 15: Feder
- 16: Anschlagfläche
- 17: Fuß
- 18: Freilauffeder
- 19: Anschlag
- 20: Aussparung
- 21: Klaue

## Patentansprüche

1. Schrittschaltwerk, insbesondere für eine Sitzverstellung in einem Fahrzeug, mit einem Gehäusebauteil (14), in welchem ein mit einem Antriebselement (2) verbindbarer oder einstückig mit diesem ausgebildeter Außenring (3) sowie ein als Abtriebselement fungierender Innenring (4) konzentrisch angeordnet sind, wobei in einem zwischen dem Außenring (3) und dem Innenring (4) gebildeten Ringraum (5) Klemmkörper (7) angeordnet sind, die mit Doppelklemmrampen (6) an mindestens einem der Ringe (3, 4) zusammenwirken, und mit zwei konzentrisch zu den Ringen (3, 4) angeordneten, gegeneinander verschwenkbaren, mit einem Anschlag (19) am Gehäusebauteil (14) zusammenwirkenden Federträgern (8), welche jeweils sowohl in den Ringraum (5) als auch in einen radial innerhalb des Innenrings (4) angeordneten Innenraum (12) eingreifen, wobei die Federträger (8) mittels mindestens einer im Innenraum (12) angeordneten Feder (15) gegeneinander verspannt sind, dadurch gekennzeichneit dass die Federträger derart gegeneinander verspannt sind, dass zur Halterung der Klemmkörper (7) in der Mitte der Doppelklemmrampen (6) geeignete Anschlagflächen (16) der Federträger (8) mit einer Kraft in Richtung ihres minimalen Abstandes beaufschlagt werden.

2. Schrittschaltwerk nach Anspruch 1, **dadurch gekennzeichnet, dass** die Federträger (8) aus Kunststoff gefertigt sind.

3. Schrittschaltwerk nach Anspruch 1 oder 2, **dadurch gekennzeichnet, dass** jeder Federträger (8) die Grundform eines dreiarmigen Sterns aufweist.

4. Schrittschaltwerk nach einem der Ansprüche 1 bis 3, **dadurch gekennzeichnet, dass** die Feder (15) als Schraubenfeder ausgebildet ist.

5. Schrittschaltwerk nach einem der Ansprüche 1 bis 4, **dadurch gekennzeichnet, dass** die Anzahl der Federn (15) der Anzahl der Klemmkörper (7) entspricht.

6. Schrittschaltwerk nach einem der Ansprüche 1 bis 5, **dadurch gekennzeichnet, dass** sämtliche Federn (15) außerhalb des Ringraums (5) angeordnet sind.

## Claims

1. Step-by-step mechanism, in particular for a seat adjustment in a vehicle, with a housing component (14), in which an outer ring (3), which can be connected to a driving element (2) or is integrally formed therewith, and an inner ring (14), which acts as a driven element, are concentrically arranged, wherein clamping bodies (7) are arranged in an annular space (5) formed between the outer ring (3) and the inner ring (4), said clamping bodies interacting with double clamping ramps (6) on at least one of the rings (3, 4), and with two spring supports (8) which are arranged concentrically with respect to the rings (3, 4), are pivotable in relation to each other, interact with a stop (19) on the housing component (14) and engage in each case both in the annular space (5) and in an internal space (12) arranged radially within the inner ring (4), wherein the spring supports (8) are braced against each other by means of at least one spring (15) arranged in the internal space (12), **characterized in that** the spring supports are braced against each other in such a manner that stop surfaces (16) of the spring supports (8), which stop surfaces are suitable for holding the clamping bodies (7) in the centre of the double clamping ramps (6), are acted upon with a force in the direction of the minimum spacing therebetween.

2. Step-by-step mechanism according to Claim 1, **characterized in that** the spring supports (8) are manufactured from plastic.

3. Step-by-step mechanism according to Claim 1 or 2, **characterized in that** each spring support (8) has the basic shape of a three-armed star.

4. Step-by-step mechanism according to one of Claims 1 to 3, **characterized in that** the spring (15) is designed as a helical spring.

5. Step-by-step mechanism according to one of Claims 1 to 4, **characterized in that** the number of springs (15) corresponds to the number of clamping bodies (7).

6. Step-by-step mechanism according to one of Claims 1 to 5, **characterized in that** all of the springs (15) are arranged outside the annular space (5).

## Revendications

1. Dispositif d'encliquetage à cran, notamment pour le réglage d'un siège dans un véhicule, comprenant un composant de boîtier (14) dans lequel sont disposées de manière concentrique une bague extérieure (3) pouvant être reliée avec un élément d'entraînement (2) ainsi qu'une bague intérieure (4) faisant office d'élément entraîné, des corps de serrage (7) étant disposés dans un espace annulaire (5) formé entre la bague extérieure (3) et la bague intérieure (4), lesquels coopèrent avec des doubles rampes de serrage (6) sur au moins l'une des bagues (3, 4), et comprenant deux supports de ressort (8) disposés de manière concentrique par rapport aux bagues (3, 4), pouvant pivoter l'un par rapport à l'autre et coopérant avec une butée (19) sur le composant de boîtier (14), qui pénètrent respectivement à la fois dans l'espace annulaire (5) et dans un espace intérieur (12) disposé dans le sens radial à l'intérieur de la bague intérieure (4), les supports de ressort (8) étant tendus les uns par rapport aux autres au moyen d'au moins un ressort (15) disposé dans l'espace intérieur (12), **caractérisé en ce que** les supports de ressort sont tendus les uns par rapport aux autres de telle sorte que des surfaces d'arrêt (16) appropriées des supports de ressort (8) soient soumises à une force dans le sens de leur espacement minimum afin de maintenir les corps de serrage (7) au centre des doubles rampes de serrage (6).

2. Dispositif d'encliquetage à cran selon la revendication 1, **caractérisé en ce que** les supports de ressort (8) sont fabriqués en plastique.

3. Dispositif d'encliquetage à cran selon la revendication 1 ou 2, **caractérisé en ce que** chaque support de ressort (8) présente la forme de base d'une étoile à trois bras.

4. Dispositif d'encliquetage à cran selon l'une quelconque des revendications 1 à 3, **caractérisé en ce que** le ressort (15) est réalisé sous forme de ressort à boudin.

5. Dispositif d'encliquetage à cran selon l'une quelconque des revendications 1 à 4, **caractérisé en ce que** le nombre de ressorts (15) correspond au nombre des corps de serrage (7).

6. Dispositif d'encliquetage à cran selon l'une quelconque des revendications 1 à 5, **caractérisé en ce que** tous les ressorts (15) sont disposés en dehors de l'espace annulaire (5).
